# EUROPEAN PATENT APPLICATION

(11) **EP 4 734 318 A1**
(43) Date of publication of application: **29.04.2026**
(21) Application number: 25210848.5
(22) Date of filing: 23.10.2025
(51) Int. Cl.: H02J 3/28, C25B 1/04, H02J 3/38, H02J 15/00, H02J 15/50

(54) **HYBRID POWER PLANT WITHOUT EMISSIONS OF CARBON AND NITROGEN OXIDES**

(30) Priority: 25.10.2024 IT 202400023946
(71) Applicant: Ansaldo Nucleare S.p.A., 16152 Genova (IT); Ansaldo Energia Switzerland AG, 5400 Baden (CH)
(72) Inventor: FRIGNANI, Michele, 16152 GENOVA (IT); CARAMELLO, Marco, 16152 GENOVA (IT); CIANI, Andrea, 5400 BADEN (CH); MANTERO, Marco, 16152 GENOVA (IT)
(74) Representative: Studio Torta S.p.A.

(57) **Abstract**

A hybrid power plant includes a nuclear source generator assembly (2), configured to provide a primary electric power (W_{EP}) from a nuclear source; an electrolyzer (3) operable to produce a first mixture (M1) containing hydrogen and a second mixture (M2) containing oxygen from a water flow (FW); a hydrogen storage system (5), coupled to the electrolyzer (3) to receive hydrogen from the first mixture (M1); an oxygen storage system (6), coupled to the electrolyzer (3) to receive oxygen from the second mixture (M2); and a hydrogen generator assembly (7), operable to produce a secondary electric power (W_{ES}) using the hydrogen from the hydrogen storage system (5) and the oxygen from the oxygen storage system (6). A power divider (8), coupled to a distribution grid (15) and to the electrolyzer (3), is configured to controllably divide the primary electric power (W_{EP}) between the distribution grid (15) and the electrolyzer (3).

## Description

### Cross-reference to related applications

This patent application claims priority from Italian patent application no. 102024000023946 filed on October 25, 2024, the entire disclosure of which is incorporated herein by reference.

### Technical field

The present invention relates to a hybrid power plant without emissions of carbon and nitrogen oxides.

### Background

As is known, the need to curb pollutant emissions to counteract the adverse effects on the climate, in many cases driven by national regulations, has provided a strong impetus for the exploitation of renewable energies. To date, in some geographical areas, a significant share of energy traditionally produced from fossil fuels has been replaced by energy from wind and photovoltaic sources, which has the advantage of having zero or virtually zero emissions of carbon and nitrogen oxides. However, despite being extremely promising, renewable sources such as wind and photovoltaic sources have the disadvantage of not always being available and for the most part, their availability is not programmable. Indeed, it is clear that such sources depend on meteorological conditions and, as regards photovoltaic sources, also on the day/night cycle and on seasonality. Under favourable conditions, non-programmable renewable sources may meet demand in accordance with the design specifications, but they are unable to guarantee a constant and, above all, predictable supply.

Non-programmable renewable sources must therefore be supplemented by programmable sources or accumulators, to meet the demands of users, particularly the grid, when conditions are not favourable (for example, weak or no wind for wind sources and cloud cover or night-time conditions for photovoltaic sources). On the other hand, supporting plants based on fossil fuels with plants based on renewable sources would lead to much less significant results in terms of reducing pollutant emissions. Although considerable progress has been made in reducing emissions deriving from the combustion of fossil fuels, current levels cannot be compared to the substantially zero levels of renewable sources such as wind and photovoltaic sources. Furthermore, the performance of plants designed for intermittent use and with variable loads may hardly be optimised with respect to pollutant emissions.

### Summary

It is therefore an object of the present invention to provide a hybrid power plant that overcomes or at least mitigates the limitations described.

According to an aspect of the present invention, there is provided a hybrid power plant comprising:
a nuclear source generator assembly, configured to supply primary electric power from a nuclear source;
an electrolyzer operable to produce a first mixture containing hydrogen and a second mixture containing oxygen from a water flow in vapour and/or liquid phase;
a hydrogen storage system, coupled to the electrolyzer to receive hydrogen from the first mixture;
an oxygen storage system, coupled to the electrolyzer to receive oxygen from the second mixture;
a hydrogen generator assembly, operable to produce secondary electric power and an exhaust steam flow using the hydrogen from the hydrogen storage system, the oxygen from the oxygen storage system and a working water flow; and
a power divider, coupled to a distribution grid and the electrolyzer and configured to controllably divide the primary electric power between the distribution grid and the electrolyzer.

The plant has the advantage of flexibly exploiting a nuclear source, which provides a substantially constant power with response times that may not be compatible with the evolution of the demand, to build up a reserve of hydrogen to be used in case of fluctuations in the load required by the grid, for example, due to the temporary unavailability of non-programmable renewable energy sources. The electric power produced by the nuclear source generator assembly may in fact be divided according to need between the distribution grid and the electrolyzer. When the balance between the demands of the users and the contributions from the energy suppliers, including the supplies from renewable sources, does not require that all the primary electric power be absorbed by the distribution grid, the available margin may be used to increase the hydrogen reallows through the electrolyzer. When the conditions are unfavourable for the production of electric power from non-programmable renewable sources, the plant may exploit the hydrogen generator assembly to provide, in addition to the primary electric power from the nuclear source generator assembly, the secondary electric power using the hydrogen from the hydrogen storage system and the oxygen from the oxygen storage system. The unavailability of the renewable sources may therefore be compensated for with energy likewise produced from a nonpolluting source, namely hydrogen, substantially without any pollutant emissions in operating conditions.

Furthermore, the hydrogen generator assembly may be designed to respond rapidly to the demands of the grid and with a response capacity substantially defined by the requirements.

The share of the primary electric power allocated to the electrolyzer may be used for auxiliary plant systems which may serve for the proper functioning of the electrolyzer itself and/or of other parts of the plant.

A further important advantage of the invention is that the emissions of carbon and nitrogen oxides are substantially eliminated in operating conditions, because the plant may operate by using and producing exclusively water in liquid and/or vapour form, i.e. in a closed cycle. In fact, the hydrogen generator assembly may use substantially pure hydrogen and oxygen for a combustion reaction which has only water as a product. The availability of hydrogen and oxygen is ensured by the electrolyzer which, again starting from water, produces the first and the second mixture, from which the hydrogen and the oxygen can be readily separated to be subsequently stored in the respective storage systems.

According to an aspect of the present invention, the nuclear source generator assembly comprises:
a nuclear reactor, configured to supply a flow of a working fluid;
a turbine, configured to extract mechanical energy from the working fluid; and
a primary electric generator, driven by the turbine.

According to an aspect of the present invention, the nuclear reactor comprises at least one reactor of the class of small modular reactors.

Herein, small modular reactors (Small Modular Reactors, SMRs, or Advanced Modular Reactors, AMRs) are understood to be small or medium-sized nuclear reactors, capable of delivering up to a few hundred MW of electric power, cooled by water or by other less conventional fluids (such as liquid metals, molten salts, gases), which may be factory-built using a modular design, in a standardised way, i.e., substantially independent of the specific characteristics of the individual installation site. Once manufactured, the modules of the small modular reactors may be transported to the installation site and put into operation, optionally by combining multiple units to meet the power requirements of the plant.

Modular production makes it possible to drastically reduce design and construction costs, as well as to optimise the performance and safety measures of the plants. The safety aspect is particularly important in the exploitation of nuclear fission, because any accidents can have catastrophic consequences. The characteristics of small modular reactors and the possibilities of optimising the design lead to safety levels higher than those of large-scale nuclear fission plants.

Small modular reactors are therefore particularly suitable to supplement non-programmable renewable sources and to compensate for temporary shortfalls in production due to unfavourable conditions, without significantly affecting emission levels.

Small modular reactors also have characteristics that allow for an expansion of the availability of compatible sites and proximity to industrial, residential or other energy production centres.

According to an aspect of the present invention, the hydrogen generator assembly comprises a hydrogen reactor, a secondary turbine and a secondary electric generator; the hydrogen reactor is coupled to the hydrogen storage system to receive hydrogen and to the oxygen storage system to receive oxygen and is operable to produce steam by combustion of the hydrogen and of the oxygen; and the secondary turbine is coupled to the hydrogen reactor to receive the steam produced by the combustion of the hydrogen.

The hydrogen reactor in practice operates as a steam generator for the secondary turbine, using the hydrogen and the oxygen provided by the hydrogen storage system and by the oxygen storage system. The steam directly produced by the combustion reaction of the hydrogen can be fed into the secondary turbine. The steam for the secondary turbine can therefore be generated substantially without pollutant emissions and is suitable for being recovered and reused in a closed cycle.

According to an aspect of the present invention, the plant comprises a water recovery system, coupled to the hydrogen generator assembly to receive an exhaust steam flow of the secondary turbine and configured to produce a water flow from the exhaust steam flow and to supply the inlet water flow to the electrolyzer.

The recovery system makes it possible to reuse the exhaust steam flow of the secondary turbine. In addition to the advantage of reducing or substantially eliminating the consumption of water resources for the conversion into hydrogen, the recovery and recirculation of the water in the plant prevents the risk of damage, malfunctions or losses of efficiency due to the presence of impurities which could otherwise reach the secondary turbine. In addition, the recovery system prevents possible plant shutdowns due to the unavailability of water for more or less prolonged periods, for example in case of drought, and avoids environmental problems due to the discharge of high-temperature water.

According to an aspect of the present invention, the plant comprises a hydrogen dryer, coupled to the electrolyzer to receive the first mixture and configured to extract hydrogen from the first mixture and to store the hydrogen extracted from the first mixture in the hydrogen storage system.

The hydrogen dryer allows to separate the hydrogen, the primary product of the electrolyzer, from the vapour contained in the first mixture. The hydrogen may thus be collected and stored in the hydrogen storage system through a dedicated line.

According to an aspect of the present invention, the plant comprises a hydrogen compressor, coupled to the hydrogen dryer and configured to compress the hydrogen extracted from the first mixture before storage in the hydrogen storage system.

The hydrogen compressor allows to bring the hydrogen separated from the hydrogen dryer to desired pressure conditions to be stored in the hydrogen storage system.

According to an aspect of the present invention, the plant comprises a balance of plant system coupled to the nuclear source generator assembly, to the electrolyzer and to the hydrogen dryer; wherein the balance of plant system is further coupled to the water recovery system to receive the water flow and is configured to heat the water flow using a fraction of the working fluid of the nuclear reactor and the first mixture supplied by the electrolyzer.

The balance of plant system uses hot flows available in the plant to preheat the inlet water flow to the electrolyzer, bringing it to the desired conditions. In this way, also the enthalpy of the first mixture, which for example in the presence of a hot electrolyzer can be very high, is advantageously exploited to the benefit of the overall efficiency of the plant.

According to an aspect of the present invention, the plant comprises an oxygen compressor coupled to the oxygen separator and configured to compress the second mixture supplied to the oxygen separator.

The oxygen compressor allows to bring the second mixture to desired pressure conditions to be processed in the oxygen separator.

According to an aspect of the present invention, the electrolyzer comprises a solid oxide electrolytic cell.

According to an aspect of the present invention, the plant according to any one of the preceding claims, comprising a control unit configured to control the power divider as a function of a load demand of the distribution grid.

According to an aspect of the present invention, the control unit is configured to:
allocate a power equal to the load demand to the distribution grid and a difference between the primary electric power and the load demand to the electrolyzer, if the load demand is lower than the primary electric power; and
allocate the whole primary electric power to the distribution grid and activate the hydrogen generator assembly to supply the secondary electric power to the distribution grid, if the load demand is higher than the primary electric power.

The control advantageously exploits the substantially constant power of the nuclear source generator assembly, using the excess over the demand to produce hydrogen to feed the hydrogen generator assembly when necessary.

### Brief description of the drawings

For a better understanding of the present invention, embodiments thereof are presented, by way of non-limiting example, with reference to the accompanying drawings, in which:
- Figure 1 is a simplified block diagram of a hybrid power plant according to an embodiment of the present invention;
- Figure 2 is a simplified block diagram of a hybrid power plant according to a different embodiment of the present invention.

### Description of embodiments

With reference to the accompanying figures, a hybrid power plant according to an embodiment of the present invention is indicated as a whole by number 1 and comprises a nuclear source generator assembly 2, an electrolyzer 3, a hydrogen storage system 5, oxygen storage system 6, a hydrogen generator assembly 7, a power divider 8, a water recovery system 9 and a control unit 10.

The nuclear source generator assembly 2 provides a primary electric power W_{EP} from a nuclear source and may comprise a nuclear reactor 11, a turbine 12 and a primary electric generator 13. It is understood that the turbine 12 may include one or more high, medium or low pressure stages, in accordance with design preferences. The nuclear reactor 11 may comprise one or more reactors of the class of small modular reactor (Small Modular Reactor, SMR). However, it is understood that the nuclear reactor may be of a different type and include, for example, microreactors, advanced modular reactors (Advanced Modular Reactors, AMR) or a large-scale non-modular nuclear reactor.

Thermal power made available by the nuclear reactor 11 is used to supply a flow of a working fluid FS, from which the turbine 12 extracts mechanical energy to drive the primary electric generator 13 and to deliver the primary electric power W_{EP}. The number of modules forming the nuclear reactor 11 is selected to make available the desired primary electric power W_{EP}. In an embodiment, the working fluid FS is water vapour and the turbine 12 includes one or more steam turbine stages.

The primary electric power W_{EP} provided by the primary electric generator 13 is allocated by the power divider 8 to a distribution grid 15 and to the electrolyzer 3 in proportions determined by the control unit 10 on the basis of a load demand L from the distribution grid 15 itself. For example, if the load demand L is less than the primary electrical power W_{EP}, the power divider 8 allocates to the distribution grid 15 a power equal to the load demand L and to the electrolyzer 3 a difference W_{EP}-L between the primary electric power W_{EP} and the load demand L. It should be noted that the primary electric power W_{EP} actually delivered may be lower than the maximum theoretically available electric power in the event that part of the thermal power is extracted to preheat the mixture entering the electrolyzer by a balance of plant system, as described hereinafter. If, on the other hand, the load demand L is higher than the primary electric power W_{EP}, the power divider 8 allocates the whole primary electric power W_{EP} to the distribution grid 15 and the control unit 10 activates the hydrogen generator assembly 7 to compensate for the excess demand.

The electrolyzer 3, when supplied by the primary electric generator 13 through the power divider 8, performs a water electrolysis process and produces a first mixture M1 containing hydrogen and a second mixture M2 containing oxygen, from a water flow FW. More precisely, the first mixture M1 contains hydrogen and water vapour, as well as any other components; the second mixture M2 contains atmospheric air enriched with oxygen deriving from the water electrolysis process. In an embodiment, the electrolyzer 3 is a hot electrolyzer, for example a solid oxide electrolyzer cell (SOEC).

The hydrogen contained in the first mixture M1 is extracted, compressed and stored in the hydrogen storage system 5. The hydrogen storage system 5 is to be understood herein as any structure, substance or material suitable to retain and make available on request the introduced hydrogen. By way of non-limiting example, the hydrogen storage system 5 may be a tank in which the hydrogen is stored under pressure; a storage system in metal hydrides (such as Zirconium) or in carbon or silicon nanotubes; or a storage system based on other chemical forms (ammonia, synthetic fuels). In the event of saturation of the hydrogen storage system 5, any excess hydrogen may be valorised by feeding it into a distribution grid, not shown here, for example for sale.

In more detail, the plant 1 is provided with a hydrogen dryer 20 which receives the mixture M from the electrolyzer 3.

The hydrogen dryer 20 condenses the vapour present in the first mixture M1 and provides the extracted hydrogen to the hydrogen storage system 5 through a hydrogen line 21. A compressor 22a along the hydrogen line 21 brings the hydrogen to be stored in the hydrogen storage system 5 to a desired pressure, in accordance with the design requirements. The condensate is returned to the water recovery system 9.

Similarly, the oxygen contained in the second mixture M2 is extracted, compressed and stored under pressure in the oxygen storage system 6.

For this purpose, the plant 1 comprises a compressor 22b, which compresses the outgoing second mixture M2 up to a desired pressure, and an oxygen separator 23 (or Air Separation Unit, ASU), which receives the second mixture M2 from the compressor 22b. The oxygen separator 23 extracts the oxygen contained in the second mixture M2 and stores it in the oxygen storage system 6 under pressure.

In one embodiment, a balance of plant system 24 communicating with the water recovery system 9 preheats the water flow FW for the electrolyzer 3 using a fraction FS' (bleeding or extraction) of the working fluid FS from the turbine 12 and the first mixture M1 and the second mixture M2 exiting the electrolyzer 3. More precisely, the balance of plant system 24 receives the water flow FW from the water recovery system 9, as explained in detail hereinafter, and brings it to desired temperature conditions by heat exchange with the fraction FS' of the working fluid FS received from the turbine 12, and with the first mixture M1 and the second mixture M2. At the outlet of the balance of plant system 24, in particular, the water flow FW may be in liquid and/or vapour phase, in accordance with the design requirements. The balance of plant system 24 may comprise several components not illustrated in detail herein, such as heat exchangers, preheaters, evaporators, superheaters and intermediate circuits. The heating of the water flow FW is particularly advantageous when the electrolyzer 3 is a solid oxide electrolytic cell, because it is possible to exploit the high enthalpy of the inlet mixtures entering the balance of plant system 24. The dual advantage is thus obtained, on the one hand, of cooling the first mixture M1 and the second mixture M2 exiting the electrolyzer 3, which could otherwise damage the plant components downstream of the electrolyzer 3 itself, and, on the other hand, of bringing the water flow FW to desired temperature conditions.

In one embodiment, the plant further comprises an electric heater 25, which further heats the water flow FW exiting the balance of plant system 24 to a desired temperature in accordance with the design requirements, before admission into the electrolyzer 3. In some embodiments, the electric heater 25 may be activated during transients, for example during plant start-up, in which the enthalpy of the mixture M is not yet sufficient to bring the water flow FW to the desired conditions through heat exchange in the balance of plant system 24. Once steady-state operating conditions are reached, the electric heater 25 could be switched off.

The hydrogen generator assembly 7 is controlled by the control unit 10 and uses the hydrogen from the hydrogen storage system 5 and the oxygen from the oxygen storage system 6 to produce a secondary electric power W_{ES} which is provided to the distribution grid 15. For example, the hydrogen generator assembly 7 may be operated by the control unit 10 to respond to load demands from the distribution grid 15 that exceed the primary electric power W_{EP} provided by the nuclear source generator assembly 2 or, in general, to support the supply of electrical energy.

In detail, in one embodiment the hydrogen generating unit 7 comprises a hydrogen reactor 27, a secondary turbine 28, in particular a steam turbine, and a secondary electric generator 30.

The hydrogen reactor 27 receives hydrogen as fuel from the hydrogen storage system 5, oxygen as an oxidiser from the oxygen storage system 6 and produces steam for the turbine 30 by combustion of the hydrogen.

The water recovery system 9 comprises a condenser 31, a pump 32 and a water collection tank 33. The condenser 31 receives an exhaust steam flow FSE of the turbine 28 and the pump 32 feeds the condensate into the water collection tank 32. From here, the water is extracted to provide the water flow FW as recovery water, which can also include the condensate of the hydrogen dryer 20. In practice, therefore, the water recovery system 9 receives the exhaust steam flow FSE of the turbine 28 condensed through the condenser 31 and the discharge of the hydrogen dryer 20, which form the water flow FW. The water flow FW is then returned to the electrolyzer 3.

As already mentioned, in a first operating condition, that is when the load demand L is lower than the primary electrical power W_{EP} and the supplementary intervention of the hydrogen generator assembly 7 is not required, a part of the primary electrical power W_{EP} itself is allocated to the electrolyzer 3 to produce hydrogen and oxygen to be stored (or possibly to be distributed for sale, in the case of hydrogen). In these conditions, the hydrogen generator assembly 7 is inactive.

On the contrary, when the load demand L is greater than the primary electrical power W_{EP}, the share allocated to the electrolyzer 3 is cancelled and the electrolyzer 3 is inactive, as are the dryer 20 and the compressors 22a, 22b, while the use of the heater 25 and of the components of the balance of plant system 24 which are intended for heating the water flow FW for the electrolyzer 3 can be limited to temperature maintenance. At the same time, the hydrogen generator assembly 7 uses the hydrogen and the oxygen from the storage systems 5, 6 to produce the secondary electrical power W_{ES} for the distribution network 15 to compensate for the excess load demand.

The embodiment of the invention described thus far is based on the use of a hot electrolyzer, in particular SOEC, which is particularly advantageous. It is however understood that cold electrolyzers, such as protonic exchange membrane (PEM) electrolyzers or anionic exchange membrane (AEM) electrolyzers, could also be used, simplifying the coupling architecture with the nuclear source generator assembly.

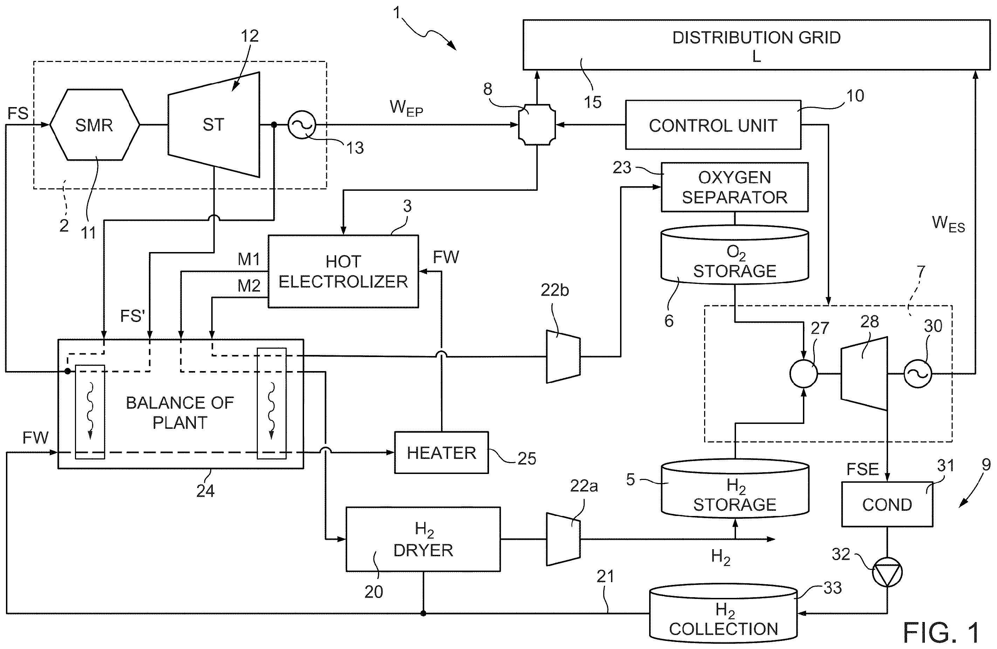

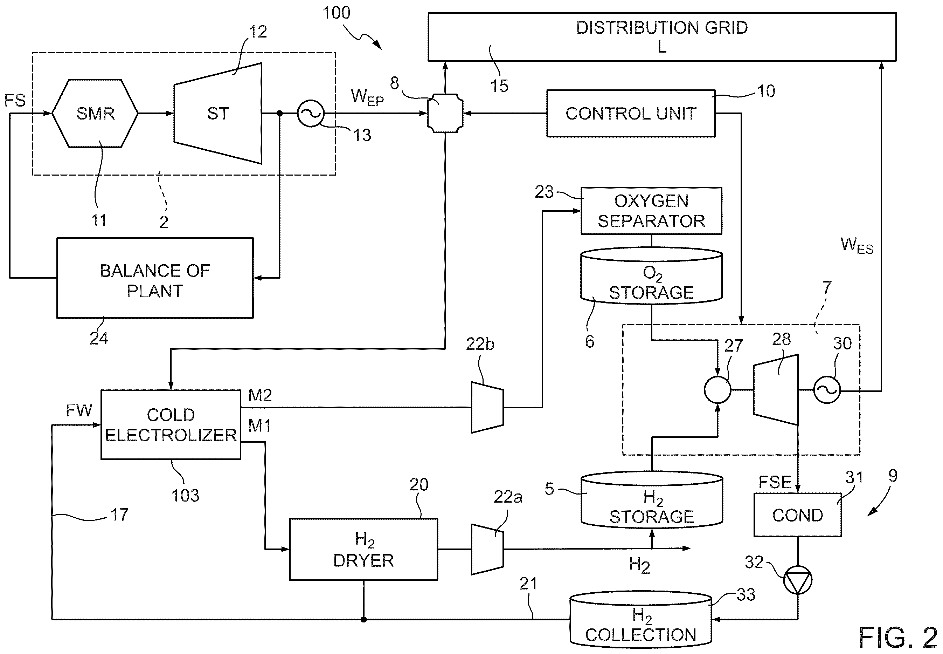

In the embodiment of Figure 2, for example, a hybrid plant for the production of electric power 100 comprises the nuclear source generator assembly 2, a cold electrolyzer 103, the hydrogen storage system 5, the oxygen storage system 6, the hydrogen generator assembly 7, the power divider 8 and the control unit 10 substantially as already described with reference to Figure 1, in addition to the hydrogen dryer 20, the oxygen separator 23, the compressors 22a, 22b and the water recovery system 9. In this case, the first mixture M1 and the second mixture M2 supplied by the electrolyzer 103 do not require cooling before being supplied to the downstream plant components (hydrogen dryer 20, compressor 22a and hydrogen storage system 5; compressor 22b, oxygen separator 23 and oxygen storage system 6; and hydrogen generating unit 7). The plant may therefore be simplified and it is not necessary to couple the outlet of the electrolyzer 103 to the balance of plant system 24, which may be optimised for the nuclear source generator assembly 2 alone.

Finally, it is clear that to the plant herein described and illustrated modifications and variations may be made without thereby departing from the scope of protection of the present invention, as defined in the appended claims.

It is understood, in particular, that the type and number of the plant auxiliaries (heat exchangers, heaters) may be selected so as to optimise the operation of the plant, also as a function of the electrolyzer technology.

In the embodiments described, the hydrogen generator assembly comprises a hydrogen reactor, a secondary turbine and a secondary electric generator. It is however understood that, in both embodiments, the hydrogen generator assembly could use one or more fuel cells and optionally the electrolyzer (hot or cold) operated in reverse as a fuel cell.

## Claims

1. A hybrid power plant comprising:
a nuclear source generator assembly (2), configured to supply a primary electric power (W_{EP}) from a nuclear source;
an electrolyzer (3; 103) operable to produce a first mixture (M1) containing hydrogen and a second mixture (M2) containing oxygen from a water flow (FW) in vapour and/or liquid phase;
a hydrogen storage system (5), coupled to the electrolyzer (3; 103) to receive hydrogen from the first mixture (M1);
an oxygen storage system (6), coupled to the electrolyzer (3; 103) to receive oxygen from the second mixture (M2);
a hydrogen generator assembly (7), operable to provide a secondary electric power (W_{ES}) using the hydrogen from the hydrogen storage system (5) and the oxygen from the oxygen storage system (6);
a power divider (8), coupled to a distribution grid (15) and to the electrolyzer (3; 103) and configured to controllably divide the primary electric power (W_{EP}) between the distribution grid (15) and the electrolyzer (3; 103).

2. The plant according to claim 1, wherein the nuclear source generator assembly (2) comprises:
a nuclear reactor (11), configured to supply a flow of a working fluid (FS);
a primary turbine (12), configured to extract mechanical energy from the working fluid (FS); and
a primary electric generator (13), driven by the primary turbine (12).

3. The plant according to claim 2, wherein the nuclear reactor (11) comprises at least one reactor of the class of small modular reactors.

4. The plant according to claim 2 or 3, wherein the hydrogen generator assembly (7) comprises a hydrogen reactor (27), a secondary turbine (28) and a secondary electric generator (30); wherein the hydrogen reactor (27) is coupled to the hydrogen storage system (5) to receive hydrogen and to the oxygen storage system (6) to receive oxygen and is operable to produce steam by combustion of the hydrogen; and wherein the secondary turbine (28) is coupled to the hydrogen reactor (27) to receive the steam produced by the combustion of the hydrogen.

5. The plant according to claim 4, comprising a water recovery system (9), coupled to the hydrogen generator assembly (7) to receive an exhaust steam flow (FSE) of the secondary turbine (28) and configured to produce the water flow (FW) from the exhaust steam flow (FSE) and to supply the water flow (FW) to the electrolyzer (3; 103).

6. The plant according to claim 5, wherein the water recovery system (9) comprises a condenser (31) operable to condense the exhaust steam flow (FSE) and a water collection tank (33) coupled to the condenser (31) to receive the condensed exhaust steam flow (FSE).

7. The plant according to any one of claims 2 to 6, comprising a hydrogen dryer (20), coupled to the electrolyzer (3; 103) to receive the first mixture (M1) and configured to extract hydrogen from the first mixture (M1) and to store the hydrogen extracted from the first mixture (M1) in the hydrogen storage system (5).

8. The plant according to claim 7, comprising a hydrogen compressor (22a), coupled to the hydrogen dryer (20) and configured to compress the hydrogen extracted from the first mixture (M1) before storage in the hydrogen storage system (5).

9. The plant according to claim 7 or 8, comprising a balance of plant system (24) coupled to the nuclear source generator assembly (2), to the electrolyzer (3; 103) and to the hydrogen dryer (20); wherein the balance of plant system (24) is further coupled to the water recovery system (9) to receive the water flow (FW) and is configured to heat the water flow (FW) using a fraction (FS') of the working fluid (FS) of the nuclear reactor (11) and the first mixture (M1) supplied by the electrolyzer (3; 103).

10. The plant according to any one of the preceding claims, comprising an oxygen separator (23), configured to extract the oxygen contained in the second mixture (M2) and to store the oxygen extracted from the second mixture (M2) in the oxygen storage system (6).

11. The plant according to claim 10, comprising an oxygen compressor (22b) coupled to the oxygen separator (23) and configured to compress the second mixture (M2) supplied to the oxygen separator (23).

12. The plant according to any one of the preceding claims, wherein the electrolyzer (3) comprises a solid oxide electrolytic cell.

13. The plant according to any one of the preceding claims, wherein the electrolyzer (103) is a cold electrolyzer, for example a proton exchange membrane electrolyzer or an anion exchange membrane electrolyzer.

14. The plant according to any one of the preceding claims, comprising a control unit (10) configured to control the power divider (8) as a function of a load demand (L) of the distribution grid (15).

15. The plant according to claim 14, wherein the control unit (10) is configured to:
allocate a power equal to the load demand (L) to the distribution grid (15) and a difference between the primary electric power (W_{EP}) and the load demand (L) to the electrolyzer (3; 103), if the load demand (L) is lower than the primary electric power (W_{EP}); and
allocate the whole primary electric power (W_{EP}) to the distribution grid (15) and activate the hydrogen generator assembly (7; 107) to supply the secondary electric power (W_{ES}) to the distribution grid (15), if the load demand (L) is higher than the primary electric power (W_{EP}).
